# EUROPEAN PATENT APPLICATION

(11) **EP 1 048 222 A2**
(43) Date of publication of application: **02.11.2000**
(21) Application number: 00107159.6
(22) Date of filing: 10.04.2000
(51) Int. Cl.: A23L 1/076

(54) **Royal jelly composition with low calorific value**

(30) Priority: 09.04.1999 JP 10241599
(71) Applicant: Cera Rica Noda Co., Ltd., Aikou-gun, Kanagawa-ken, 243-0303 (JP)
(72) Inventor: Xu, Ying Ying, c/o CERA RICA NODA CO., LTD, Kanagawa-ken, 243-0303 (JP); Nomura, Masayuki, c/o CERA RICA NODA CO., LTD, Kanagawa-ken, 243-0303 (JP)
(74) Representative: VOSSIUS & PARTNER

(57) **Abstract**

There is disclosed a preparative royal jelly with low caloric value, which contains a raw royal jelly, erythritol and oligosaccharide derived from soybean, and is in the form of a paste.

## Description

The present invention relates to a preparative royal jelly excellent in its taste and for human health.

The royal jelly is a viscous substance with milk-white or pale yellowish color, which is given to honey bee larvae and a queen bee and has been known from old times as efficacious for perpetual youth and longevity, nourishment, robustness and so on.
The royal jelly is classified into a -raw royal jelly-, -dried royal jelly- which is the lyophilized product of the raw royal jelly, and -preparative royal jelly- which is prepared by adding an auxiliary material or additive to the raw or dried royal jelly. It has been marketed as health food, alimentary and roborantal preparation or nutrient supplement.

The amount of the royal jelly to be taken in which is required for developing its efficacy has generally been said to be 300mg-3g/day in Japan and 3-5g/day in China based on the amount of the raw royal jelly. The effective amount cannot definitely been stated, since the royal jelly has not been authorized as a medicine.
It has been considered that the royal jelly develops its most superior efficacy when it is taken in in the raw state, but the intake of raw royal jelly by itself may be unpleasant for the person, since the royal jelly has an inherent styptic taste stimulating the tongue. The royal jelly is one of the natural products with delicate properties and the handling may be troublesome as refrigeration or freezing is required to keep its freshness.

Therefore, the royal jelly has been widely marketed as preparative royal jelly, in which honey, lactose or similar sweetener are generally added. However, many of such preparative royal jellies contain the sweetener in a large amount, in order to reduce the styptic taste of the raw royal jelly. As a result, the caloric intake becomes higher, which neither matches the essential purpose of the royal jelly intake nor does it meet the present intention to health.

Therefore, an object of the present invention is to provide a preparative royal jelly with low caloric value, wherein the styptic taste inherent to raw royal jelly has been remarkably suppressed, the taste of which is good and which shows a positive effect on human health.
An additional object of the invention is to provide the preparative royal jelly accommodated in a vessel in a form which makes intake thereof easy.

As a result of intensive study and investigation for attaining the objects, the inventors have found means so that the styptic taste of the raw royal jelly disappears, the taste is excellent, the caloric value is low, and an action for controlling function of intestinal tracts can be expected, by a preparative royal jelly which is a paste and comprises a raw royal jelly, erythritol, and oligosaccharides derived from soy bean.

An intrinsic efficacy of the raw royal jelly cannot be expected, if the amount thereof in the preparative royal jelly is less that an intake of 3-5g/day, whereas, if the content of raw royal jelly is too high, the inherent styptic taste increases, so that the object of the invention cannot be attained.

Among the ingredients or components of the preparative royal jelly according to the invention, erythritol is selected due to its sweetness and taste. The erythritol is a sugar alcohol, a natural glycide contained also in fermented foods in addition to various fruits etc., and the sole substance having no calorie within the glycides, since it cannot be metabolized in the body. Therefore, the erythritol can be added in an optional amount, but it is preferable to add 50-200% by weight to the raw royal jelly.

The oligosaccharide derived from soybean is also selected due to its taste. It has been well known that oligosaccharides accelerate propagation of useful bacteria in intestinal tracts to develop an action for controlling function of the intestinal tracts. Human digestive enzymes cannot decompose the oligosaccharide and thus it can be added in an optional amount, but it is preferable to add 50 - 200% by weight to the raw royal jelly.

If necessary, a flavor, coloring matter, viscosity increasing agent and the like used for general foods can be further added to the preparative royal jelly according to the invention.

The preparative royal jelly according to the invention is a paste- like product and thus can be accommodated in a vessel, such as a laminated tube, whereby deterioration of the raw royal jelly in the product, due to oxidation can be inhibited. And foreign feeling on the intake of the royal jelly can be avoided by spreading the same on a bread such as butter .

The invention will now be further explained in more detail with reference to an Example and Test Example.

### Example 1 (Production of preparative royal jelly with low caloric value)

Erythritol powder (40g) was added to water (30g) to heat and dissolve the same. After leaving the solution to cool, raw royal jelly (20g) and oligosaccharide (10g) derived from soybean were added and sufficiently stirred to obtain a desired preparative royal jelly with low caloric value.

The preparative royal jelly taken in in an amount of 20g at a time corresponds to an intake of 4g of raw royal jelly to satisfy the required intake of the same per day.

### Example 2 (Filling into a vessel)

The preparative royal jelly with low caloric value obtained in Example 1 was filled into a laminated tube to obtain the preparative royal jelly accommodated in a tube.

### Test Example (Organoleptic test)

An organoleptic test was carried out with the preparative royal jelly obtained in Example 1 by a panel of 23 members to check visual appearance, color tone, hardness (stickiness or viscosity), sweetness, after- taste, and taste by 5 graduational evaluation method which the highest point is 5.

As a control, a similar organoleptic test was carried out using a raw royal jelly to compare both royal jellies. Mean values of all panelists are shown in Table 1 below. Each of the mean values on the preparative royal jelly (Example 1) according to the invention exceeds that on the raw royal jelly, in all evaluation items and the Table particularly shows that the styptic taste inherent to the raw royal jelly disappears in the preparative royal jelly.

The tested preparative royal jelly with low caloric value does not contain a flavor, coloring matter, viscosity increasing agent or the like, but the evaluation will become higher if such a substance is added in a suitable amount.

**Table 1**

| Evaluation item | Example 1 | Control |
|---|---|---|
| Visual appearance | 4.4 | 3.8 |
| Color tone | 4.3 | 3.5 |
| Hardness | 4.0 | 3.4 |
| Sweetness | 3.8 | 1.7 |
| After- taste | 3.2 | 1.3 |
| Taste | 3.1 | 1.6 |
| Mean value in all evaluation items | 3.8 | 2.6 |

## Claims

1. A preparative royal jelly with low caloric value comprising raw royal jelly, erythritol, and oligosaccharide derived from soybean in the form of a paste.

2. A preparative royal jelly as claimed in Claim 1, wherein said erythiritol and oligosaccharide are added in a ratio of 50 - 200% by weight to said raw royal jelly, respectively.

3. A preparative royal jelly as claimed in Claim 1 or 2, wherein said preparative royal jelly is accommodated in a laminated vessel.
